Europäisches Patentamt

European Patent Office

Office européen des brevets

(19)

(11) Numéro de publication: **0 127 549**
**B1**

(12) **FASCICULE DE BREVET EUROPEEN**

(45) Date de publication du fascicule du brevet: **18.01.89**

(51) Int. Cl.⁴: **E 01 C 13/00, E 02 F 5/10**

(21) Numéro de dépôt: **84401107.2**

(22) Date de dépôt: **30.05.84**

(54) **Procédé d'aménagement de terrains de sports et machines pour la mise en oeuvre du procédé.**

(30) Priorité: **30.05.83 FR 8308893**
**01.06.83 FR 8309042**

(43) Date de publication de la demande:
**05.12.84 Bulletin 84/49**

(45) Mention de la délivrance du brevet:
**18.01.89 Bulletin 89/03**

(84) Etats contractants désignés:
**AT BE CH DE GB IT LI LU NL SE**

(56) Documents cités:
**BE-A- 870 579**
**DE-B-1 105 355**
**FR-A-2 254 212**
**FR-A-2 422 772**
**FR-A-2 506 800**

(73) Titulaire: **Geminet, Andre**
**480 rue de la Vallée**
**F-45160 Olivet (FR)**

(72) Inventeur: **Geminet, Andre**
**480 rue de la Vallée**
**F-45160 Olivet (FR)**

(74) Mandataire: **Viard, Jean**
**Cabinet VIARD 28 bis, avenue Mozart**
**F-75016 Paris (FR)**

Courier Press, Leamington Spa, England.

EP 0 127 549 B1

# Description

La présente invention a pour objet un procédé pour l'aménagement du sol de terrains destinés en particulier, mais non exclusivement, à la pratique de sports collectifs tels que le football et le rugby, recouverts de gazon naturel. L'invention vise également les machines destinées à mettre en oeuvre le procédé ainsi que les terrains aménagés selon ledit procédé.

On sait que les terrains de sports sont particulièrement maltraités car ils sont amenés à subir les piètinements répétés des joueurs dont les chaussures sont munies de crampons. Il en résulte un effet de compactage du sol. Cet effet contribue à la diminution du volume et du nombre de cavités ·formées dans le sol ce qui provoque une diminution importante de l'apport d'oxygène aux plantes et graminées ce qui se traduit, en période de sécheresse même légère, par une détérioration de la pelouse.

Afin d'entretenir celle-ci, il est nécessaire de l'arroser périodiquement. Ce problème de l'eau est crucial dans le domaine. En effet, si il faut fournir l'eau nécessaire à la pelouse, il faut que la quantité d'eau soit parfaitement dosée. Dans le cas contraire, il se forme à la surface du terrain des flaques rendant celui-ci impraticable, en particulier lorsque le sous-sol est argileux. Ce qui précède vaut pour les pays à pluviosité modérée mais surtout dans le cas des pays à forte pluviosité où les joueurs se retrouvent très souvent dans la boue.

Pour pallier cet inconvénient, la solution classique consiste à prévoir un drainage d'évacuation au- dessous du terrain, comme décrit dans le document FR—A— 2 254 212 qui concerne un procédé consistant à créer un réseau de drains logés dans des massifs filtrants reliés à un collecteur et un drainage de surface réalisé à l'aide de tranchées drainantes recoupant les massifs filtrants sur une partie de leur hauteur, les drains et massifs filtrants état disposés en épi par rapport à un axe du terrain ou parallèlement à celui-ci.

Toutefois, en ce qui concerne les terrains de sports, notamment dans les pays à forte pluviosité, cette technique s'est révélée tout à fait insuffisante pour permettre l'évacuation des eaux pluviales, dès lors que les précipitations sortent des normes habituelles.

Un premier objet de l'invention est la réalisation d'un réseau de drainage permettant l'évacuation convenable des eaux de pluie jusqu'à cinquante millimètres d'eau par 24 heures.

Un second objet de la présente invention est la réalisation d'un terrain revêtu de gazon naturel tel que les racines des graminées puissent se développer en profondeur, dans un milieu constamment humidifié, pour pouvoir résister au piètinement.

D'une manière générale, il est souhaitable, avant de semer le gazon de travailler la terre afin que sa surface supérieure soit souple et aérée. Il est connu, pour la préparation d'un lit de semences, de procéder, après labourage, à un hersage. Cette opération est actuellement réalisée à l'aide de herses rotatives dont les dents tournent autour d'une multiplicité d'axes verticaux. Ces machines donnant des résultats satisfaisants en agriculture ne sont cependant pas suffisates pour les terrains de sports qui requièrent un état de surface parfaitement plan.

Un autre objet de la présente invention est une machine permettant un mélange intime du sable, des tourbes et des engrais en surface sur une épaisseur de 0,1 à 0,3 mètres; un tamisage de la terre en surface; un tassement de la terre afin que les machines d'engazonnement ne laissent pas de traces et une surface parfaitement plane.

Selon la présente invention, le procédé d'aménagement d'un terrain de sports ou analogue consist à:
- mettre à niveau le fond de forme après extraction de la terre végétale;
- remettre en place la terre végétale;
- creuser un réseau de tranchées parallèles entre elles et reliées à un collecteur;
- disposer des drains au fond des tranchées;
- remplir les trachées avec des cailloux;
- former un réseau de fentes verticales dont les directions sont inclinées par rapport à celle des tranchées et dont la partie inférieure pénètre dans la partie supérieure des tranchées;
caractérisé en ce que, après remplissage des tranchées, il comprend les étapes suivantes:
- recouvrement de la surface par une couche uniforme de matériau granulaire;
- ouverture du sol à l'aide d'une machine formant les fentes et les remplissat simultanément avec le matériau granulaire se trouvant à la surface pour constituer des puits de ruissellement;
- recouvrement de la surface par une couche superficielle;
- nivellement à l'aide d'une niveleuse;
- engazonnement.

L'invention concerne également une machine pour la formation de puits de ruissellement et leur remplissage par du sable selon le procédé ci-dessus, caractérisée en ce qu'elle comprend au moins une lame verticale et solidaire du châssis, à l'extrémité inférieure de laquelle sont fixés un sabot et un boulet draineur, la profondeur de pénétration de la lame dans le sol étant définie par la position d'au moins deux socs disposés symétriquement par rapport à la lame, les socs, réglables, en hauteur, étant incurvés et convergents vers l'arrière du châssis pour râcler le matériau granulaire et l'introduire dans les fentes.

D'autres caractéristiques et avantages de l'invention apparaîtront au cours de la description qui va suivre de modes particuliers de réalisation de l'invention, donnés uniquement à titre d'exemples non limitatifs en regard des dessins qui représentent:
- La Fig. 1, une vue par-dessus d'un terrain de sport;
- La Fig. 2, une coupe verticale partielle de ce terrain;
- La Fig. 3, la même coupe après achèvement de l'aménagement;

- La Fig. 4, une coupe selon la ligne IV—IV de la Fig. 2;

- La Fig. 5, une coupe selon la ligne V—V de la Fig. 2,

- Les Figs 6, 7 et 8 un premier mode de réalisation d'une machine selon la présente invention;

- Les Figs 9, 10 et 11 un second mode de réalisation d'une machine à trois lames;

- Les Figs 12 à 15, des vues d'une niveleuse selon l'invention respectivement de côté, par-dessus, par l'arrière et par l'avant.

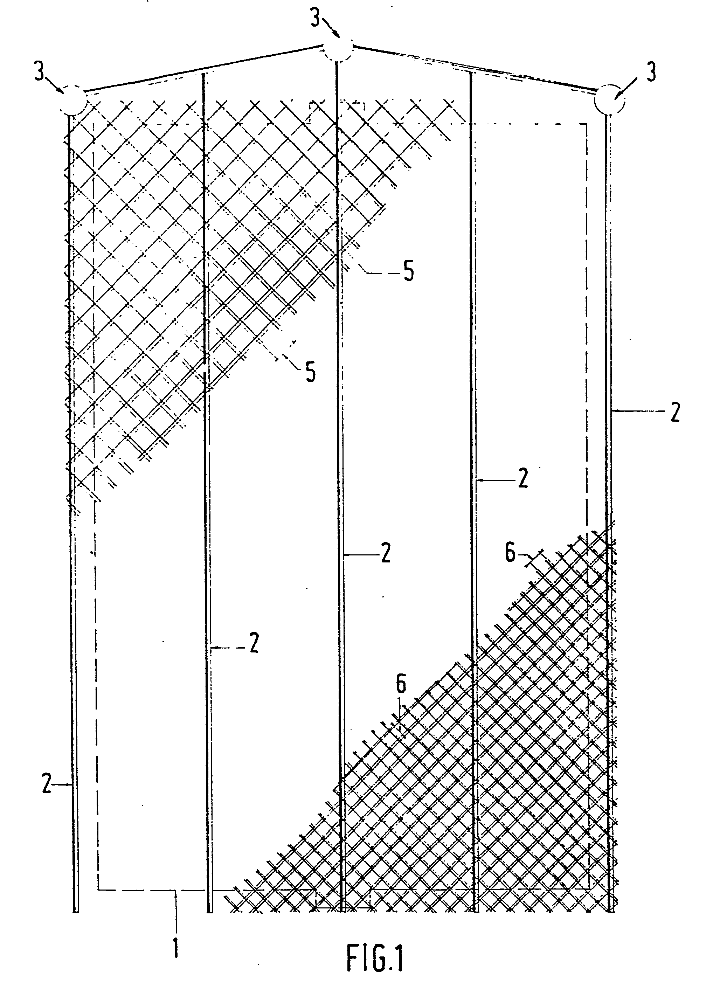

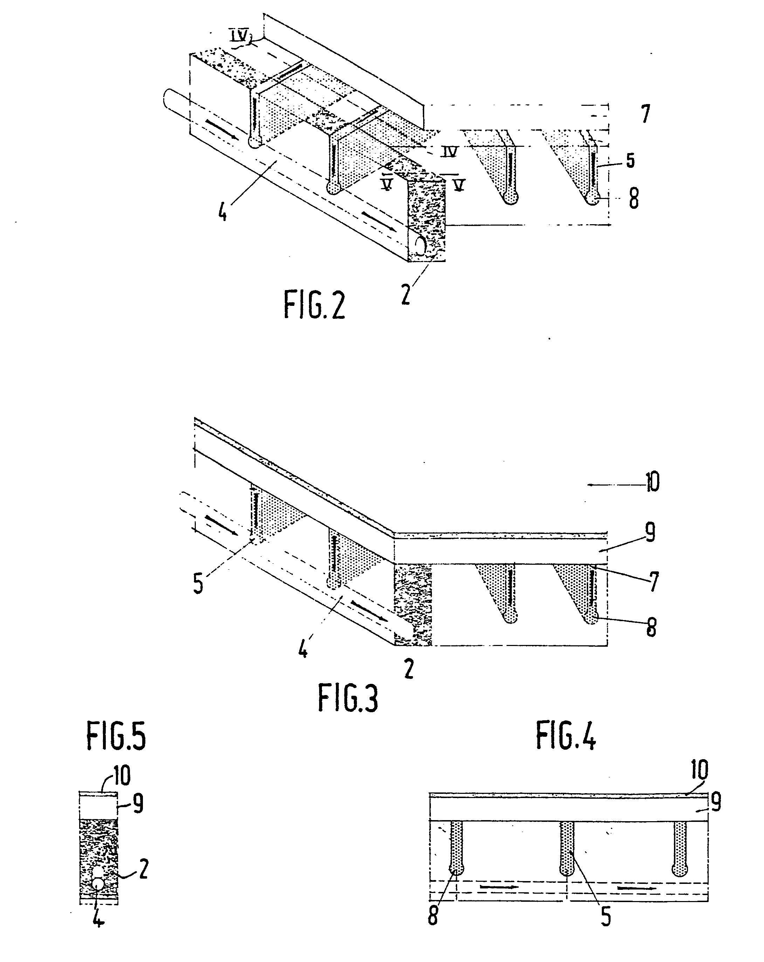

Sur la Fig. 1, le terrain 1 est de forme rectangulaire. Parallèllement à la longueur du rectangle s'étendent des tranchées de drainage 2. Ces tranchées sont reliées à des collecteurs 3 permettant d'évacuer l'eau recueillie dans les tranchées 2. Comme celà apparait sur la Fig. 2, des drains collecteurs 4 sont disposés à la partie inférieure des tranchées 2.

Avant établissement de ce réseau de drainage, la terre végétale a été extraite, le fond de la forme du terrain a été nivelé et la terre végétale remise en place. Dans le cas de terrains de football ou rugby, on prévoit une pente entre le grand axe longitudinal et les rives, cette pente étant comprise entre 0,05 et 10 mm par mètre. L'épaisseur de terre végétale varie de 0,15 m à 0,30 m, comme pour les aires de jeux, les golfs et les hippodromes. Bien entendu, les valeurs indiquées dans cette description ne le sont qu'à titre d'exemple.

Les tranchées longitudinales 2 ont une largeur de 0,4 à 0,6 m. et leur profondeur est de 0,6 à 1,3 m. Les drains collecteurs 4 sont, par exemple, de diamètre 0,10 m. et sont posés sur le fond des tranchées avec des pentes vers les collecteurs. Enfin, les tranchées sont remplies de cailloux lavés de 20/40 ou 20/60 à moins de 0,20 m. du sol fini.

Ce premier réseau de drainage peut être considéré comme en soi connu et s'est révélé insuffisant dans le cas de terrains de sports à cause de l'imperméabilité de la couche supérieure martelée par les joueurs.

Selon l'invention, l'ensemble ainsi constitué est recouvert d'une couche de sable de rivière 0,005 ou 0,006 qui est épandu sur toute la surface du terrain sur une épaisseur régulière de 0,20 à 0,25 m. Puis, le sol est ouvert selon des directions diagonales 5 ou 6 (Fig. 1) avec une machine qui sera décrite ultérieurement. Les fentes ont une hauteur de 0,4 à 0,8 m. et traversent les tranchées 2 au-dessus des drains 4 et, au maximum à 0,2 m au dessus de ceux-ci. La disposition en diagonale des fentes 5 ou 6 est préférée car elle permet de mettre en contact une fente 5 avec l'ensemble des tranchées 2 tout au moins dans le région centrale du terrain. On voit mieux sur la Fig. 2 la répartition des fentes 5 par rapport à une tranchée 2. Sous l'action de la machine, au fur et à mesure que se forment les fentes 5 en diagonale, elles se remplissent du sable 7 réparti à la surface du terrain. Selon les cas, la distance entre deux fentes 5 adjacentes peut être de 0,8 m (partie inférieure de la Fig. 1) ou de 1,2 m (partie supérieure). Des boulets cylindriques forment à la partie inférieure des fentes 5 des chambres cylindriques 8.

L'ensemble du terrain est ensuite recouvert d'une couche superficielle 9 comme représenté sur la Fig. 3 puis recouvert de gazon 10. Avantageusement, le support 9 est constitué d'un mélange de terre végétale (50 à 60 %) de sable de rivière (25 à 40 %), de tourbe blonde (10 à 20 %) et d'engrais organique (3 à 8 %).

L'aménagement du terrain qui vient d'être décrit permet d'obtenir une évacuation parfaite de l'eau qui, après traversée de la couche superficielle 9, est absorbée par les puits 5, puis par les tranchées 4 et les drains 2. Par contre les puits de ruissellement 5 constituent, en quelque sorte, une réserve d'humidité dans laquelle le gazon peut puiser en cas d'atmosphère extérieure dessiccante. Les racines des graminées peuvent ainsi s'étendre sur une profondeur de 0,2 à 0,3 m. afin de trouver l'humidité nécessaire à leur développement. La présente invention permet donc de régulariser l'humidité du terrain, presqu'indépendamment des conditions climatiques ce qui est très favorable à la bonne tenue du gazon que l'on peut constater, notamment devant les cages de gardiens de buts. Ce résultat provient notamment de la présence du sable qui est très absorbant dans les puits 5 ou 6 qui constitue en quelque sorte une réserve d'eau. Les puits 5 ou 6 peuvent également être formés perpendiculairement aux tranchées 4 Mais il est nécessaire qu'il y ait des intersections multiples puits-tranchées.

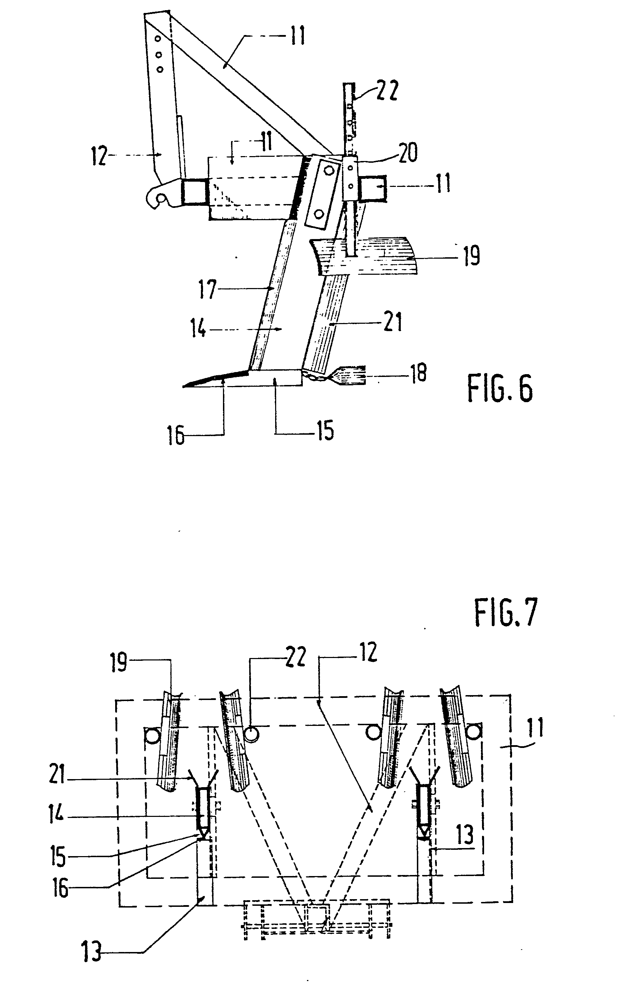

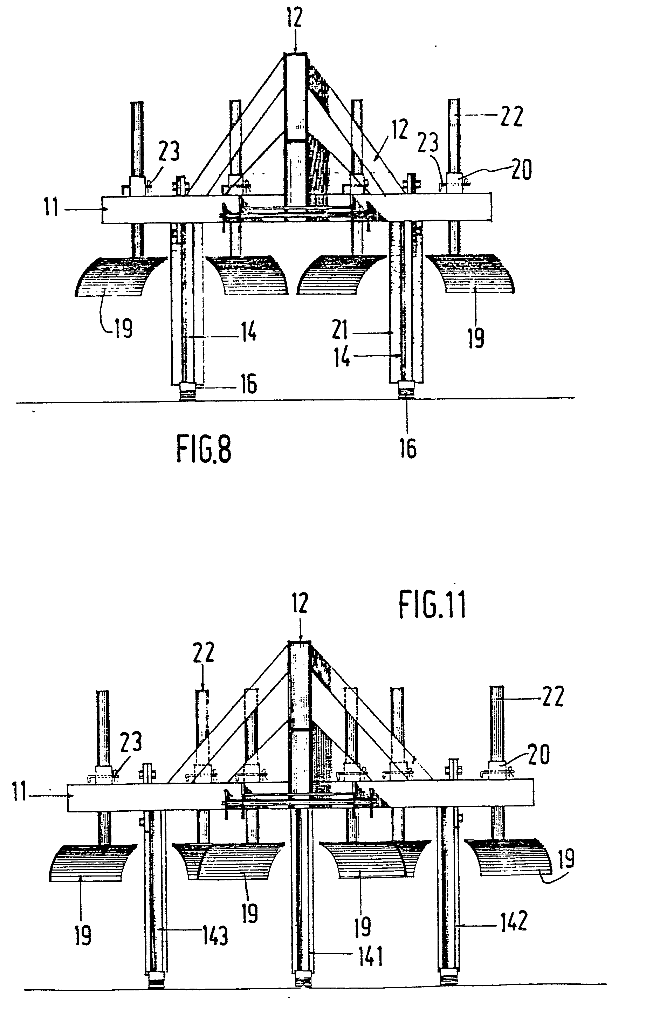

Les Figs. 6, 7 et 8 représentent un premier mode de réalisation d'une machine destinée à former les puits 5 ou 6, respectivement en vue de côté, en vue par dessus et en vue de face, cette machine étant à deux lames. Elle doit, d'une part, ouvrir le sol sur une hauteur désirée et, d'autre part, remplir les ouvertures ainsi constituées avec du sable préalablement épandu à la surface en couche régulière.

Sur ces Figs. on voit que la machine se compose d'un châssis 11, par exemple en tube d'acier à section carrée, équipé d'un attelage 12 "trois points" automatique international permettant de la remorquer par un tracteur agricole ou par un engin de travaux publics, éventuellement à chenilles. Sur le châssis 11, sont montées sur des bras fixes 13 des lames verticales 14, inclinées vers l'avant et terminées à leurs parties inférieures par un sabot 15, les sabots 15 étant soudés sur les lames 14. Sur les sabots 15 sont fixés des socs d'usure 16 interchangeables. De même sur chaque lame 14 est fixé un coutre d'usure 17 interchangeable. A l'arrière de chacun des sabots 15 est fixé un boulet draineur 18 fixé sur le sabot par un maillon d'acier ou par tout autre moyen adéquat. Le rôle de ces boulets 18 est de former des cavités 8 qui seront remplies de sable à la partie inférieure des puits.

Sur le châssis 11, sont également montés des socs 19 incurvés, destinés à râcler le sable pour le faire pénétrer à l'intérieur des fentes 5 ou 6. Les socs 19 sont montés sur le châssis par l'intermédiaire de supports réglables 20 de manière à ce que la profondeur de travail par rapport à l'extrémité inférieure de la lame puisse être réglée. Les tiges supports 22 coulissent, par exemple dans des tubes à section carrée solidaires du bâti, dans lesqueles elles sont bloquées par des boulons 23 ou par tout autre moyen convenable. A l'extrémité arrière de chaque lame 14 sont soudées des oreilles 21 destinées à agrandir l'ouverture de la fente créée par le déplacement de la lame dans le sol. Par exemple, si la lame 14 a une épaisseur de 0,10 m, l'ouverture de la fente peut être portée à 0,15 m. Dans le mode de réalisation qui est représenté, les lames 14 sont fixes par rapport au bâti 11, mais il serait possible de les rendre réglables en prévoyant des bras 13 coulissant sur le châssis 11. Les lames 14 ont une hauteur de l'ordre de 1 mètre environ. Grâce au dispositif d'attelage 12, l'ensemble peut être relevé lors du transport ou lorsque la machine effectue des manoeuvres pour passer d'un rang à l'autre. Par suite de la forme des sabots et de l'inclinaison de la lame, la pénétration dans le sol se fait sans difficulté majeure. Dans le cas d'une machine à deux lames, de bons résultats ont été obtenus avec un écartement des lames égal à 1,2 mètre, la pénétration dans le sol étant comprise entre 0,4 et 0,8 m., cette profondeur étant réglée par la hauteur des socs 19.

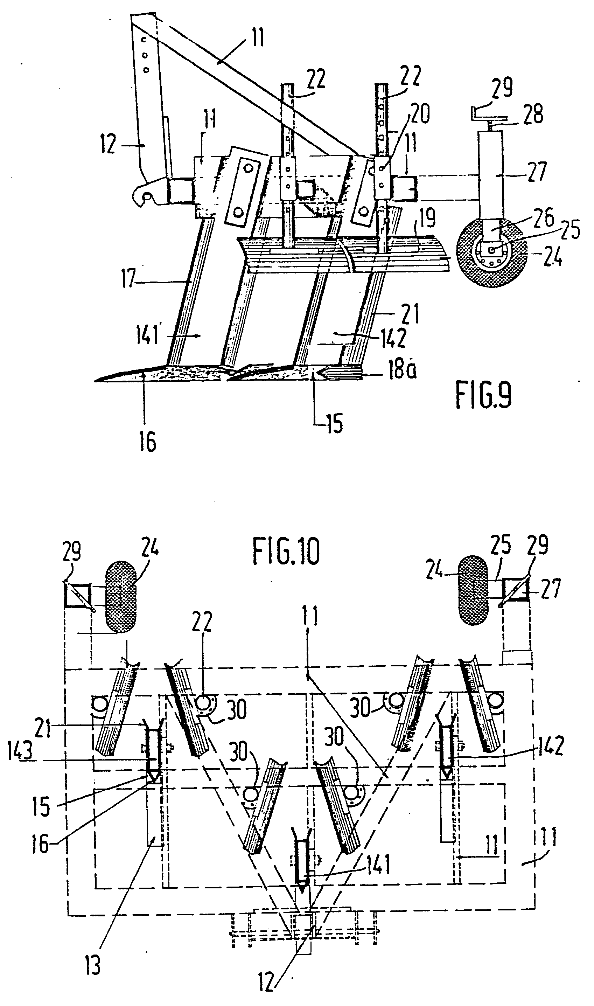

Sur les Figs. 9, 10 et 11 est représenté un autre mode de réalisation dans lequel trois lames 141, 142 et 143 sont montées sur le châssis 11. Les mêmes références désignent les mêmes éléments et le fonctionnement est identique. De préférence, toutefois, les lames ne sont espacées que d'une distance de 0,8 m. par exemple. Bien entendu, dans ce cas, le travail est effectué plus rapidement mais la consommation, d'energie est egalement plus importante. Comme cela apparait plus clairement sur les Figs. 9 et 10, l'inclinaison des socs 19 par rapport a la direction de deplacement de la machine permet à ceux-ci de râcler le sable qui se trouve sur le sol et de le diriger à l'intérieur des fentes qui sont ainsi immédiatement remplies.

Les Figs. 9 et 10 présentent des modifications par rapport au mode de réalisation précédent. Dans celui-ci le réglage de la profondeur des fentes était effectué d'une part par le réglage des versoirs ou socs racleurs 19, mais également par action sur l'attelage.

Dans certains cas, il est souhaitable de pouvoir disposer d'un réglage plus fin. A cet effet, on a prévu de monter la machine sur deux roues 24 dont l'axe 25 est solidaire d'un bras 26 coulissant dans un tube carré 27 et pouvant être bloqué dans le tube par une broche (non représentée). Le coulissement du bras dans le tube est commandé par une vis 28 solidaire d'une manivelle 29. Par action sur la manivelle 29, il est possible de monter ou descendre les roues 24 par rapport au châssis 11 afin de régler la profondeur de la machine sous-soleuse suivant la pente du terrain.

Les boulets draineurs 18a peuvent également être réalisés en deux parties et soudés de part et d'autre des flancs des lames 14.

Les versoirs ou socs racleurs 19 sont avantageusement réglables en hauteur et montés sur des tourelles composées de deux flasques circulaires 30 fixés respectivement sur le versoir et sur le rapport coulissant 31. Ce montage permet l'orientation des racleurs par des goupilles d'acier. Bien entendu, ces variantes peuvent être mises en oeuvre quel que soit le nombre de lames 14.

Dans la description qui précède, seul le sable a été mentionné en tant que matière de remplissage des fentes 5 ou 6, mais il est bien entendu possible d'utiliser dans le même but des matériaux présentant les mêmes propriétés d'absorption tels que de l'argile expansée ou des résidus miniers.

Le terrain ayant été aménagé comme il vient d'être dit, le choix d'un gazon adapté permet de lui assurer une très haute tenue pendant plusieurs années. L'entretien se fait annuellement par aération, perforation, scarification, toutes opérations qui n'entrainent aucun danger pour le système de drainage. La rénovation peut être assurée en retirant la couche superficielle 9 sans toucher à l'infrastructure. Il est également possible de procéder à une réfection partielle du gazon par placage sur les parties les plus fortement usées.

La présente invention résoud ainsi le problème de l'eau à la surface des terrains de sports par un système de drainage amélioré permettant à l'eau de ruissellement de filtrer à travers la couche superficielle 9 sans en modifier les vertus végétales, un matériau filtrant (sable ou analogue) étant en contact direct avec le matériau des tranchées (cailloux) par suite de la pérpétration de la machine dans la partie supérieure des tranchées 4, les unes étant inclinées en diagonale sur les autres. La capacité d'absorption d'eau est ainsi de 50 mm en 24 heures ce qu est amplement suffisant.

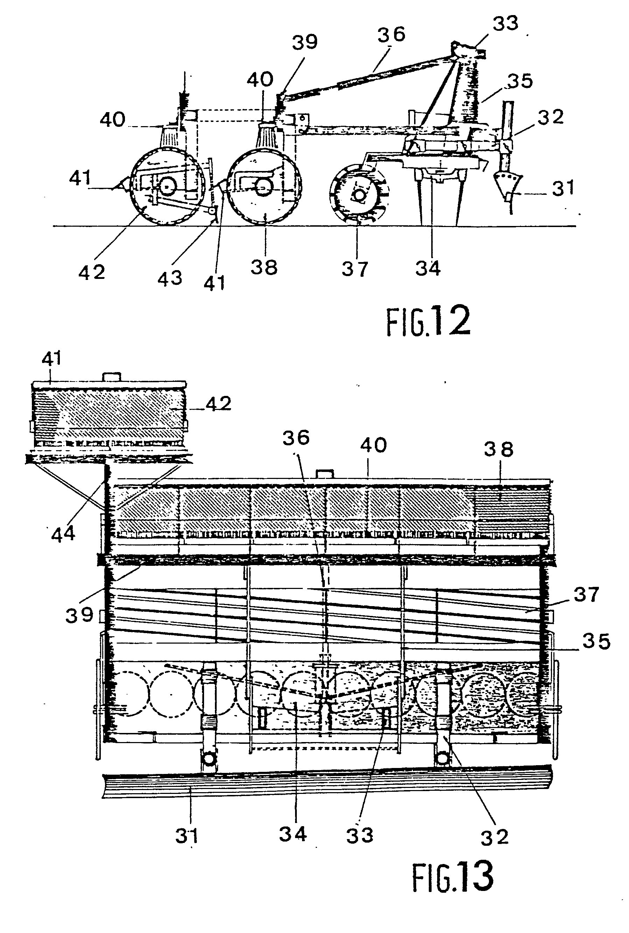

Sur la Fig. 12, la niveleuse est représentée en vue de côté, le tracteur prenant position du côté droit de la Fig. Une lame de bouteur 31 est montée sur un support 32 de manière à être coulissante dans le support 32, le coulissement étant bloqué par une vis. La lame 31 est incurvée et orientée en biais de manière à effacer les traces laissées par les roues du tracteur. Un support de relevage 33 de type classique permet d'atteler la niveleuse au tracteur. Derrière la lame de bouteur 31 se trouve une herse rotative 34 de type connu, puis une rouleau 37 de tassement, composé de barres hélicoïdales dacier. Un premier rouleau tamiseur 38 est relié au chassis de la machine par une liaison comportant un bras 35 et un bras 36 triangulés et réunis à une pièce support 39 sur lequel est monté le rouleau 38. Le bras 36 de longueur réglable par une vis permet de régler la hauteur du rouleau sur le sol et la pression de celui-ci. Le rouleau 38 est constitué par un cylindre recouvert d'un treillage en losange dont les mailles ont, par exemple, des dimensions de 14 cm. sur 5 cm. Après hersage par la herse 34 et tassement par le rouleau 37, la terre est tamisée par le rouleau 38 qui enterre les pierres de dimensions supérieures à la section d'une maille, les pierres de dimensions plus réduites pénétrant à l'intérieur du rouleau 38. Certaines de celles-ci risquent toutefois de rester coincées dans des mailles. Afin de nettoyer le rouleau 38 en permanence, une brosse 40, réglable, s'étendant le long d'une génératrice du rouleau balaye la surface de celui-ci au fur et à mesure qu'il progresse. De même, une barre d'acier 41 montée sur ressorts élimine la terre ou les pierres emprisonées dans les mailles du rouleau 38.

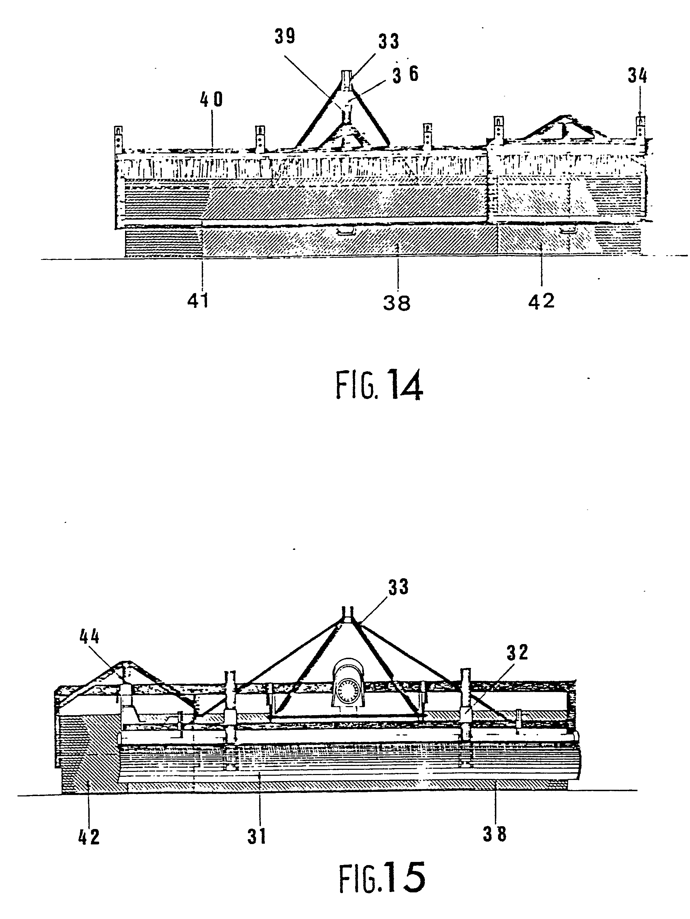

Comme celà apparaît mieux sur le Fig. 13 qui est une vue par dessus, le rouleau 38 est suivi par un petit rouleau 42 dont les mailles sont de mêmes dimensions que celles du rouleau 38 mais dont la longueur (ou largeur si l'on considère le rouleau en position) est égale à environ un tiers de la longueur (largeur) du rouleau 38, les diamètres des deux rouleaux étant identiques. Le rouleau 42 est monté sur un support réglable 44. Le rouleau 42 permet un nivellement définitif des raccords de croisement successifs après passage de la niveleuse dont la largeur est e 1 mètre environ. Comme celà apparaît sur la Fig. 13, le rouleau 42 est décalé par rapport à l'axe de progression de la machine.

Sur l'axe du rouleau 42 est montée une seconde lame de bouteur 43 réglable en hauteur. Elle est également orientée afin d'écrêter les différences de niveau pouvant subsister. Comme le rouleau 38, le rouleau 42 est muni d'une brosse 40 et d'une barre de râclage 41.

Ces différents éléments apparaissent sur les Figs 14 et 15 qui sont respectivement une vue par l'arrière et une vue par l'avant d'une niveleuse selon l'invention. Cette niveleuse permet d'obtenir un état de surface impeccable et de travailler la terre en mélangeant intimement le sable, les tourbes et les engrais. Elle tasse la terre en surface et tamise celle-ci. Le tassement de la terre évite que les engazonneuses ne laissent des traces sur le sol. Elle peut également être utilisée chaque fois que l'on désire un terrain présentant un état de surface parfait.

**Revendications**

1. Procédé d'aménagement d'un terrain de sports ou analogue consistant à:

mettre à niveau le fond de forme après extraction de la terre végétale;

remettre en place la terre végétale.

creuser un réseau de tranchées (2) parallèles entre elles, et reliées à un collecteur (3);

disposer des drains au fond des tranchées (2);

remplir les tranchées avec des caillou;

former un réseau de fentes verticales (5) dont les directions sont inclinées par rapport à celle des tranchées (2) et dont la partie inférieure pénètre das la partie supérieure des tranchées (2);

caractérisé en ce que, après remplissage des tranchées, il comprend les étapes suivantes.

recouvrement de la surface par une couche uniforme de matériau granulaire (7);

ouverture du sol à l'aide d'une machine format les fentes (5) et les remplissat simultanément avec le matériau granulaire (7) se trouvant à la surface pour constituer des puits de ruissellement;

recouvrement de la surface par une couche superficielle (9);

nivellement à l'aide d'une niveleuse;

engazonnement.

2. Procédé selon la revendication 1, caractérisé en ce que les fentes verticales (5) sont inclinées selon les diagonales du terrain (1) sur les tranchées (2 parallèles à direction longitudinale du terrain (1) de façon à constituer un quadrillage.

3. Machine pour la formation de puits de ruissellement (5) et leur remplissage par du sable selon le procédé de la revendication 1, caractérisée en ce qu'elle comprend au moins une lame (14) verticale et solidaire du châssis (11), à l'extrémité inférieure de laquelle sont fixés un sabot (15) et un boulet draineur (18), la profondeur de pénétration de la lame das le sol état définie par la position d'au moins deux socs (19) disposés symétriquement par rapport à la lame (14), les socs (19), réglables en hauteur, étant incurvés et convergents vers l'arrière du châssis (11) pour râcler le matériau granulaire (7) et l'introduire das les fentes (5).

4. Machine selon la revendication 3, caractérisée en ce qu'elle comporte un châssis (11) muni d'un attelage (12) sur lequel est monté au moins une lame (14), le châssis comportant deux roues (24) réglables en hauteur par des manivelles (29).

5. Machine selon l'une des revendications 3 et 4, caractérisée en ce que le boulet draineur (18) constitué de deux parties (18a) est soudé de part et d'autre de la lame (14).

6. Niveleuse pour la mise en oeuvre du procédé selon la revendication 1, destinée à préparer les sols avant leur engazonnement, caractérisée en ce qu'elle comprend une herse rotative (34) suivie d'un premier rouleau de tassement (37), un second rouleau (38) étant constitué par un treillage en losange, pour tamiser la terre, s'étendant sur la même largeur que le rouleau de tassement (37), un troisième rouleau (42) de largeur réduite par rapport à la largeur des rouleaux (37, 38) état monté à l'arrière du rouleau (38) et décalé vers l'extérieur par rapport à celui-ci, permettant un nivellement des raccords de croisement après passage de la niveleuse.

7. Niveleuse selon la revendication 6, caractérisée en ce qu'une lame de bouteur (31) est disposée en avat de la herse rotative (34).

8. Niveleuse selon l'une des revendications 6 ou 7, caractérisée en ce que les rouleaux tamiseurs (38, 42) sont munis de brosses (40) et de barres râcleuses (41).

**Patentansprüche**

1. Verfahren zum Einrichten eines Sportplatzes od. dgl. bestehend aus:

Einebnen des Untergrundes nach dem Abtragen der Gartenerde;

Rückführen der Gartenerde an ihren Platz;

Ausheben eines Netzes von untereinander parallelen Einschnitten (2), die mit einem Sammler (3) verbunden sind;

Verlegen von Abflußrohren auf dem Boden der Einschnitte (2);

Auffüllen der Einschnitte mit Kieselsteinen;

Herstellen eines Netzes von vertikalen Schlitzen (5) deren Richtungen gegenüber jenen der Einschnitte (2) geneigt sind, und deren unterer Abschnitt den oberen Abschnitt der Einschnitte (2) durchdringt;

dadurch gekennzeichnet, daß es nach der Füllung der Einschnitte folgende Schritte umfaßt:

Überdeckung der Oberfläche durch eine einheitliche Schicht von granuliertem Material (7);

Öffnung des Bodens mit Hilfe einer Maschine, welche die Schlitze (5) herstellt, und gleichzeitig diese mit dem granulierten Material (7) füllt, das sich an der Oberfläche befindet, um die Abflußgräben zu bilden;

Abdeckung der Oberfläche mit einer künstlichen Oberflächenschicht (9);

Einebnen mit Hilfe eines Planiergerätes;

Begrünung.

2. Verfahren gemäß Anspruch 1, dadurch gekennzeichnet, daß die vertikalen Schlitze (5) gemäß der Diagonalen des Platzes (1) gegenüber den zur Längsrichtung des Platzes (1) parallelen Einschnitten (2) unter Ausbildung eines Karomusters geneigt sind.

3. Maschine zur Herstellung von Abflußgräben (5) und ihrer Füllung mit Sand gemäß dem Verfahren nach Anspruch 1, dadurch gekennzeichnet, daß sie mindestens eine vertikale und mit dem Chassis (11) fest verbundene Schneide (14) aufweist, an deren unterem Ende ein Schuh (15) und ein Drainierkörper (18) befestigt sind, wobei die Eindringtiefe der Schneide in die Erde durch die Stellung von mindestens zwei Scharen (19) gegeben ist, die symmetrisch zur Schneide (14) angeordnet sind, und wobei die Scharen (19) in ihrer Höhe einstellbar, gekrümmt und gegen das Ende des Chassis (11) konvergent sind, um das granulierte Material (7) abzukratzen und in die Schlitze (5) einzuführen.

4. Maschine gemäß Anspruch 3, dadurch gekennzeichnet, daß sie ein Chassis (11) aufweist, das mit einer Kupplung (12) ausgestattet ist, auf welcher zumindest eine Schneide (14) montiert ist, wobei das Chassis zwei durch Kurbeln (29) in der Höhe einstellbare Räder (24) aufweist.

5. Maschine gemäß einem der Ansprüche 3 oder 4, dadurch gekennzeichnet, daß der Drainierkörper (18), der aus zwei Teilen (18a) besteht, beidseitig an der Schneide (14) angeschweißt ist.

6. Planiergerät für die Durchführung des Verfahrens gemäß Anspruch 1, bestimmt zur Aufbereitung des Bodens vor der Begrünung mit Rasen, dadurch gekennzeichnet, daß es eine von einer ersten Verdichtungswalze (37) gefolgte rotierende Egge (34), eine zweite aus einem rautenförmigen Gitterwerk gebildete Walze (38) zum Sieben der Erde, die sich auf derselben Breite wie die Verdichtungswalze (37) erstreckt, und eine dritte Walze (42) aufweist, welche eine kleinere Breite als die Walzen (37, 38) die hinter der Walze (38) angebracht ist, hat, außen gegenüber dieser hervorragt, und ein Einebnen der Kreuzungsstellen nach der Durchfahrt des Planiergeräts erlaubt.

7. Planiergerät nach Anspruch 6, dadurch gekennzeichnet, daß eine Korrekturschneide (31) vor der rotierenden Egge (34) angeordnet ist.

8. Planiergerät gemäß einem der Ansprüche 6 oder 7, dadurch gekennzeichnet, daß die rotierenden Siebe (38, 42) mit Bürsten (40) und Schabern (41) ausgestattet sind.

**Claims**

1. Method of preparing a sports ground or the like, comprising:

levelling the sub-base after removing the topsoil;

replacing the topsoil;

cutting a network of trenches (2) parallel inter se and connected to an outfall ditch (3);

disposing drains in the bottom of the trenches (2);

filling the trenches with pebbles;

forming a network of vertical crevices (5) the direction of which are inclined in relation to that of the trenches (2) and the bottom part of which penetrates the upper part of the trenches (2);

characterised in that, after filling of the trenches, the method comprises the following stages:

covering the surface with a uniform layer of granular material (7);

opening up the soil using a machine which forms crevices (5) and filling them at the same time with the granular material which is on the surface in order to provide surface water soakaways;

covering the surface with a surface layer (9);

levelling, using a grader;

grassing.

2. Method according to claim 1, characterised in that the vertical crevices (5) are inclined to the diagonals of the soil (1) on the trenches (2) parallel with the longitudinal direction of the soil (1) in such a way that a grid is formed.

3. Machine for forming surface water soakaways (5) and filling them with sand by the method according to claim 1, characterised in that it comprises at least one vertical blade (14) rigid with the chassis (11), at the bottom end of which are fixed a shoe (15) and a ditching tool (18), the depth of penetration of the blade into the soil being defined by the position of at least two ploughshare-like members (19) disposed symmetrically in relation to the blade (14), the ploughshare-like members (19) being of regulable height, incurvate and converging towards the rear of the chasses (11) to scrape the granular material (17) into the crevicesmaterial (17) into the crevices (5).

4. Machine according to claim 3, characterised in that it comprises a chassis (11) provided with a drawbar (12) on which there is mounted at least one blade (14), the chassis comprising two wheels (24), the height of which can be adjusted by crank handles (29).

5. Machine according to one of claims 3 and 4, characterised in that the ditching tool (18) consists of two parts (18a) welded one on either side of the blade (14).

6. Grader for carrying out the method according to claim 1, intended for preparing soils prior to grassing, characterised in that it comprises a rotary harrow (34) followed by a first compacting roller (37), a second roller (38) consisting of a lozenge-shaped wire grid for screening the earth and extending over the same width as the compacting roller (37), a third roller (42) which is not so wide as the rollers (37, 38) being mounted at the rear of the roller (38) and offset outwardly in relation to this latter, permitting levelling of the intersecting joins after the grader has passed.

7. Grader according to claim 6, characterised in that a grader blade (31) is disposed in front of the rotary harrow (34).

8. Grader according to one of claims 6 or 7, characterised in that the screening rollers (38, 42) are provided with brushes (40) and scraper bars (41).

FIG.1

FIG.2

FIG.3

FIG.5

FIG.4

2

FIG. 6

FIG. 7

FIG.8

FIG.11

FIG.9

FIG.10

FIG.12

FIG.13

FIG. 14

FIG. 15